**Europäisches Patentamt**

**European Patent Office**

**Office européen des brevets**

(11) Veröffentlichungsnummer: **0 168 554**
**B1**

(19)

## (12) EUROPÄISCHE PATENTSCHRIFT

(45) Veröffentlichungstag der Patentschrift:
03.08.88

(51) Int. Cl.⁴: **D 21 F 1/00**

(21) Anmeldenummer: **85103144.3**

(22) Anmeldetag: **18.03.85**

(54) Spiralsiebband.

<table>
<tr><td>

**Ein Antrag nach Regel 88 EPÜ auf Berichtigung der Prioritätserklärung wurde am 25.06.1985 eingereicht.**

(30) Priorität: 26.03.84 DE 3411112

(43) Veröffentlichungstag der Anmeldung:
22.01.86 Patentblatt 86/4

(45) Bekanntmachung des Hinweises auf die Patenterteilung:
03.08.88 Patentblatt 88/31

(84) Benannte Vertragsstaaten:
AT BE CH DE FR GB IT LI NL SE

(56) Entgegenhaltungen:
EP - A - 0 018 200
EP - A - 0 094 638
US - A - 2 769 531

</td><td>

(73) Patentinhaber: **F. Oberdorfer GmbH & Co. KG Industriegewebe-Technik, Kurze Strasse 11, D-7920 Heidenheim (DE)**

(72) Erfinder: **Krenkel, Bernhard, Dr., Waiblinger Weg 14, D-7920 Heidenheim (DE)**
Erfinder: **Vöhringer, Fritz, Marderweg 4, D-7920 Heidenheim (DE)**

(74) Vertreter: **Kern, Wolfgang, Dipl.-Ing. et al, Patentanwälte Tischer, Kern & Brehm Albert-Rosshaupter-Strasse 73, D-8000 München 70 (DE)**

</td></tr>
</table>

## Beschreibung

Die Erfindung betrifft ein Spiralsiebband in ein- und mehrlagiger Ausführung aus einer Vielzahl von hintereinander angeordneten Spiralen aus Kunststoffmaterial, deren Wendeln ineinandergreifen.

Ein solches Spiralsibband ist aus der EP 0 018 200 bekannt. Dieses Band ist mit einer Basislage aus mehreren parallel und ineinandergreifend angeordneten, gelenkig miteinander verbundenen Spiralen sowie mit einer Zusatzlage aus weiteren, parallel und ineinandergreifend angeordneten, miteinander verbundenen Spiralen, welche mit der Basislage verbunden ist, versehen, wobei sich die Spiralen der Zusatzlage über die Ebene der Basislage hinaus nach aussen erstrekken mit dem Ziel, das Siebband vor Verschleiss und Beschädigung zu schützen. Alle Spiralen können vorzugsweise aus mono- oder multifilen Synthetikdrähten bestehen.

Ein ähnliches Ziel wird mit der aus der EP 0 094 638 bekannten Spiralbandkonstruktion angestrebt, bei der die monofilen Windungen der einen Spiralen aus Polyester und andere monofile Spiralen aus einem abriebfesten, druck- und hydrolysebeständigen Material, vorzugsweise aus Polyamid bestehen, und diese Windungen reissverschlussartig ineinandergreifen und durch vorzugsweise aus Polyester bestehende Steckdrähte gesichert sind, um die Lebensdauer der Spiralbänder und damit die Laufzeit solcher Spiralbandsiebe auf Papiermaschinen zu erhöhen. Letzteres soll insbesondere dadurch erreicht werden, dass die Polyamidspiralen aus stärkeren Drähten bestehen und dadurch die Polyesterspiralen vor Abnutzung schützen.

Bekanntlich lässt aber die Längsstabilität der Spiralbänder aus Polyamid, da dieses Material sehr dehnfähig ist, zu wünschen übrig. Ausserdem ist die Wasseraufnahme von Polyamid relativ hoch. Aus diesen Gründen ist eine alleinige Verwendung von aus Polyamid bestehenden Spiralbändern in Entwässerungsmaschinen nicht möglich, da sich aufgrund der Wasseraufnahme die Breite des Spiralbandes ändert und wegen der hohen Längsspannung zur Wellenbildung führt.

Die obigen Nachteile werden nun zwar durch die kombinierte Verwendung von Polyester und Polyamid für die Spiralen weitgehend reduziert, jedoch bleibt nach wie vor der Schwachpunkt derartiger Spiralbänder die durch die Polyamidspiralen erheblich geminderte Längsstabilität und Formstabilität des Bandes.

Die Aufgabe der Erfindung besteht deshalb darin, das Spiralsiebband der genannten Art so weiterzubilden, dass trotz Verwendung von Polyamidspiralen eine Längsstabilität und Formstabilität bei gleichzeitiger Verbesserung der Abriebfestigkeit des Bandes erreicht werden, die den Einsatz in Entwässerungsmaschinen, insbesondere Papiermaschinen, unproblematisch macht.

Diese Aufgabe wird erfindungsgemäss dadurch gelöst, dass zumindest ein Teil der Spiralen in wenigstens einer Lage des mehrlagigen Siebbandes als Doppelspiralen jeweils aus zwei nebeneinanderliegenden spiralförmig gewickelten Drähten ausgebildet sind, von denen der eine Draht der Doppelspirale aus Polyester und der andere Draht aus Polyamid bestehen.

Vorteilhafte Ausgestaltungen der Erfindung sind in den Unteransprüchen gekennzeichnet.

Die Doppelspiralen aus Polyester und Polyamid, die beispielsweise dadurch hergestellt werden können, dass zwei Drähte, nämlich ein Polyamiddraht und ein Polyesterdraht, gleichzeitig nebeneinander über einen Dorn gewickelt und anschliessend thermisch vorfixiert werden, führt zu einer erheblichen Steigerung der Formstabilität des Siebbandes in Längs- und Querrichtung bei gleichzeitiger Steigerung der Abriebfestigkeit, da durch die Doppelspiralen aus Polyamid der abriebfeste Anteil des Siebbandes wesentlich vergrössert wird.

Das gleichzeitige Wickeln der Polyester- und Polyamidspiralen kann derart geschehen, dass entweder der Dorn rotiert und damit die Polyamid- und Polyester-Fäden von den Spulen abzieht oder dass die Polyamid- und Polyester-Vorratsspulen um den stehenden Dorn auf einer Kreisbahn rotieren.

## Patentansprüche

1. Spiralsiebband in ein- und mehrlagiger Ausführung aus einer Vielzahl von hintereinander angeordneten Spiralen aus Kunststoffmaterial, deren Wendeln ineinandergreifen, dadurch gekennzeichnet, dass zumindest ein Teil der Spiralen in wenigstens einer Lage des mehrlagigen Siebbandes als Doppelspiralen jeweils aus zwei nebeneinanderliegenden spiralförmig gewickelten Drähten ausgebildet sind, von denen der eine Draht der Doppelspirale aus Polyester und der andere Draht aus Polyamid bestehen.

2. Spiralsiebband nach Anspruch 1, dadurch gekennzeichnet, dass die Doppelspiralen unterschiedliche Drahtdurchmesser aufweisen.

3. Spiralsiebband nach Anspruch 1 oder 2, dadurch gekennzeichnet, dass wenigstens einige Hohlräume der Doppelspiralen mit Füllmaterial ausgefüllt sind.

4. Spiralsiebband nach Anspruch 3, dadurch gekennzeichnet, dass die Füllmaterialien multi- oder monofile Drähte sind.

5. Spiralsiebband nach einem der Ansprüche 1 bis 4, dadurch gekennzeichnet, dass wenigstens die Doppelspiralen in einem Teil einer oder mehrerer Lagen vorgespannt sind.

6. Spiralsiebband nach Anspruch 5, dadurch gekennzeichnet, dass sich die Vorspannung eines Teils der Doppelspiralen von der Vorspannung eines anderen Teils der Doppelspiralen in ein- und derselben oder in verschiedenen Lagen unterscheidet.

## Revendications

1. Bande-tamis en spirale à une et plusieurs couches, comprenant une multitude de spirales en matière synthétique disposées l'une après l'autre dont les hélices s'engrènent, caractérisée en ce qu'au moins une partie des spirales dans au moins une couche de la bande-tamis multicouche est formée en spirales doubles constituées dans chaque cas par deux fils juxtaposés enroulés en spirale dont l'un des fils de la double spirale est en polyester et l'autre en polyamide.

2. Bande-tamis en spirale selon la revendication 1, caractérisée en ce que les spirales doubles présentent des calibres de fil différents.

3. Bande-tamis en spirale selon la revendication 1 ou 2, caractérisée en ce qu'au moins quelques-uns des espaces creux des spirales doubles sont remplis de matière de remplissage.

4. Bande-tamis en spirale selon la revendication 3, caractérisée en ce que les matières de remplissage sont des fils multi- ou monofilaires.

5. Bande-tamis en spirale selon l'une quelconque des revendications de 1 à 4, caractérisée en ce qu'au moins les spirales doubles sont mises en précontrainte dans une partie d'une ou de plusieurs couches.

6. Bande-tamis en spirale selon la revendication 5, caractérisée en ce que la précontrainte d'une partie des spirales doubles diffère de la précontrainte d'une autre partie des spirales doubles dans une seule et même couche ou dans différentes couches.

**Claims**

1. Spiral fabric of one or multi-layered design comprising a multiplicity of spirals of plastic material arranged behind one another, the windings of which are engaging one another, characterized in that at least part of the spirals in at least one layer of the multi-layered fabric is structured as double spirals consisting of two adjacently located, helically wound wires, one of that wires of the double spiral consists of polyester and the other wire of polyamide.

2. Spiral fabric according to claim 1, characterized in that the double spirals have different diameters of wire.

3. Spiral fabric according to claim 1 or 2, characterized in that at least some hollow spaces of the double spirals are filled with filling material.

4. Spiral fabric according to claim 3, characterized in that the filling materials are multifile or monofile wires.

5. Spiral fabric according to one of the claims 1–4, characterized in that at least the double spirals are retentioned in one part of one or more layers.

6. Spiral fabric according to claim 5, characterized in that the pretention of one part of the double spirals is different from the pretention of another part of the double spirals in one and the same or in different layers.